# EUROPEAN PATENT APPLICATION

(11) **EP 2 493 192 A1**
(43) Date of publication of application: **29.08.2012**
(21) Application number: 09850506.8
(22) Date of filing: 23.10.2009
(51) Int. Cl.: H04N 7/18, H04N 5/232

(54) **IMPROVED METHOD AND SYSTEM FOR VIDEO MONITORING**

(71) Applicant: Alcatel Lucent, 75007 Paris (FR)
(72) Inventor: WANG, Yujian, Shanghai 201206 (CN); HUANG, Bo, Shanghai 201206 (CN); PING, Huibing, Shanghai 201206 (CN); HUANG, Qiangxiong, Shanghai 201206 (CN); JIANG, Hongyue, Shanghai 201206 (CN)
(74) Representative: MERH-IP Matias Erny Reichl Hoffmann
(86) International application number: PCT/CN2009/074579
(87) International publication number: WO 2011/047510

(57) **Abstract**

The present invention provides a method and system for improving video surveillance. The system comprises a video surveillance platform ViSS and a first server SVAS connected to the video surveillance platform. The video surveillance platform includes also a second server CSM and a gateway CSG. A user side camera captures the user's head motion and a user side DVS sends the captured video to the SVAS via the ViSS. The SVAS processes the video, analyzes the head motion and sends the result of analysis to the CMS. Then, the CMS sends a corresponding instruction to the CSG according to the result of analysis. Next, the CSG translates the received instruction into a PTZ control instruction and sends this PTZ control instruction to an on-site DVS. Finally, the on-site DVS indicates an on-site camera to perform a corresponding action according to the PTZ control instruction.

## Description

### Field of the invention

The present invention relates to the field of communications, and more particularly relates to intelligent video surveillance based on head motion analysis.

### Background of the invention

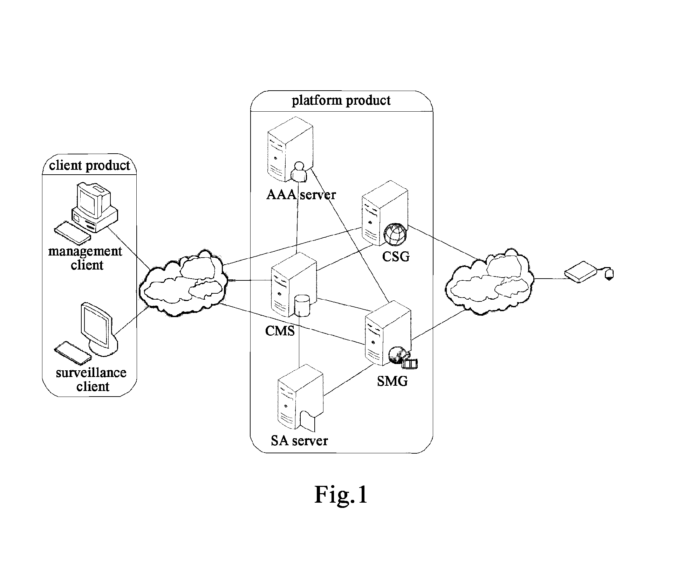

The intelligent video surveillance system ViSS is a system for remotely monitoring, transmitting and managing intelligent video based on the broadband network, developed by Alcatel-Lucent Shanghai Bell Co., Ltd. As shown in Figure 1, a video surveillance system is composed of a platform, clients, and a head end etc., typically including a CMS (central management server), an AAA (authentication, authorization and accounting) server, a CSG (control signaling gateway) (also known as access server), a SMG (stream media gateway) (also known as access server), an AS (alarm server) and a SA (storage agent) server etc..

The CMS is the core of the whole system and is responsible for backstage implementation of various managing functions of the video surveillance system and managing various data of the system. The SMG is mainly responsible for distributing video. It is necessary for a plurality of users who are remotely monitoring to send a request to the SMG when they access the same network video server, and then the SMG will send a request to the network video server. Afterwards, the SMG is responsible for distributing data received from the network video server to a plurality of remote users who are monitoring, in order to guarantee that there is a unique media stream between the network video server and the SMG distribution server. The CSG is responsible for forwarding various monitoring orders sent from clients to corresponding network video servers, for example a cloud platform control order etc., and for receiving various alarm information gathered from the network video server and delivering it to the management server.

The ViSS system uses the PTZ control technology to control the cloud mirror of the front camera. PTZ is the abbreviation of Pan/Tilt/Zoom, which means controlling the omni directional motion of the could platform (up, down, left, right) and the zoom in and zoom out of the camera lens. The current ViSS products adopt keyboard/mouse as the man-machine interaction interface of the PTZ control, which is inconvenient for those who can not use the keyboard/mouse (for example a disabled person) or are unable to use computers, and with which it is difficult for a user to obtain a visual experience with the feeling of immersion.

### Summary of the Invention

The aim of the invention is to solve the above problem in the prior art.

According to an aspect of the present invention, a method for improving video surveillance is proposed, in which a video surveillance platform is connected to a first server, the video surveillance platform also comprises a second server and a gateway. The method comprises: a user side camera capturing the user's head motion and a user side digital video processing unit sending the captured video to the first sever via the video surveillance platform; the first server processing the video, analyzing the head motion and sending the result of analysis to the second server; and the second server sending a corresponding instruction to the gateway according to the result of analysis. The method comprises also the gateway translating the received instruction into a PTZ control instruction and sending this PTZ control instruction to an on-site digital video unit, and then the on-site digital video unit indicates an on-site camera to perform a corresponding action according to the PTZ control instruction.

According to another aspect of the present invention, a system for improving video surveillance is proposed, comprising a video surveillance platform and a first server connected to the video surveillance platform. The video surveillance platform includes also a second server and a gateway. The first server is used for processing a video about a user's head motion forwarded by the video surveillance platform upon reception of said video, analyzing the head motion and sending the result of analysis to the second server. The second server is used for sending a corresponding instruction to the gateway after having received the result of analysis, according to the result of analysis. The gateway is used for translating the received instruction into a PTZ control instruction and sending this PTZ control instruction to an on-site digital video unit, and then the on-site digital video unit indicates an on-site camera to perform a corresponding action according to the PTZ control instruction.

### Brief Description of the Drawings

These and many other features and advantages of the present invention will become apparent from the following description of the embodiments of the present invention with reference to the drawings, wherein:
Figure 1 schematically shows the existing intelligent video surveillance system ViSS;
Figure 2 schematically shows how to perform the PTZ control based on head motion analysis in the ViSS system;
Figure 3 schematically shows the video surveillance system according to an embodiment of the present invention;
Figure 4 schematically shows the connections between various network elements in the video surveillance system according to an embodiment of the present invention;
Figure 5 schematically shows the information exchanging process between various network elements in the video surveillance system according to the present invention; and
Figure 6 is a flowchart of the video surveillance method according to an embodiment of the present invention.

### Detailed Description of the Invention

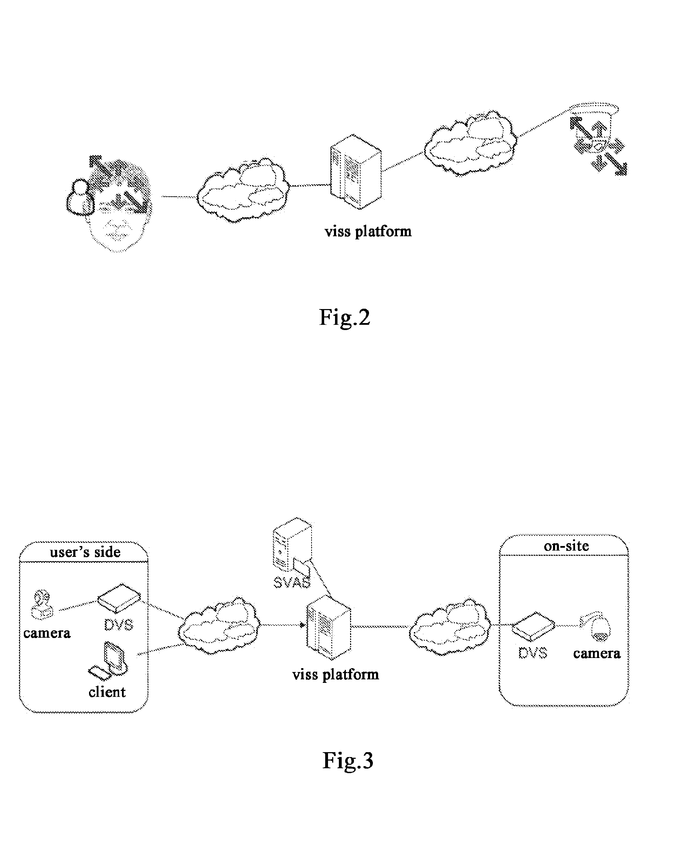

The basic idea of the present invention is to introduce an intelligent video processing module into the existing ViSS system, so as to perform the PTZ control to a camera using a user's head motion information. The present invention adopts the moving target detection and analysis technology of the intelligent video analysis technology in order to detect a user's head location and motion information by analyzing video gathered by means of a camera at user side and to track a target automatically and autonomously by triggering an on-site PTZ camera with instructions. Figure 2 schematically shows how to perform the PTZ control based on head motion analysis in the ViSS system.

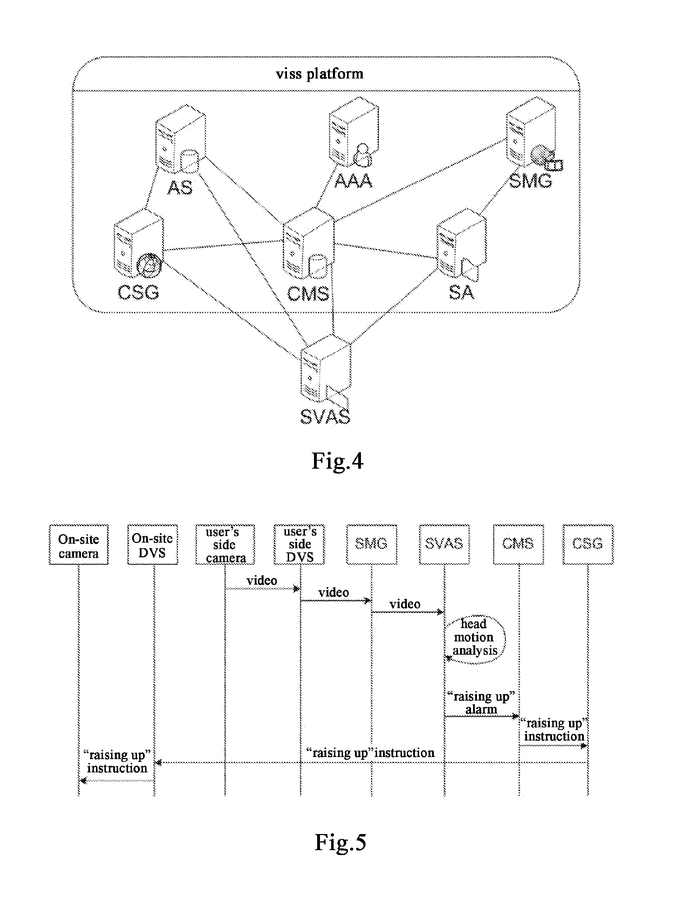

Figure 3 shows a video surveillance system according to an embodiment of the present invention, Figure 4 shows the connections between various network elements in the video surveillance system, and Figure 5 shows the information exchanging process between various network elements in the video surveillance system. Referring to Figures 3, 4 and 5, an intelligent video processing module, which is herein a semantic video application server SVAS, is connected to the existing ViSS platform. When a camera at user's side begins to capture head motion of the user, a digital video server DVS connected to this camera will send the captured video to the ViSS platform. Then, the ViSS platform will send the captured video to the SVAS, and thus the SVAS can analyze the head motion by using the intelligent motion detection and analysis algorithm. As to the intelligent motion detection and analysis algorithm, reference could be made to "A method for robust estimation of three dimensional motion parameters" by Xue ning Sun, Ping fan Yan, Chinese Journal of Computers, 1990, 13(7), Pages 481-488. However, it should be clear that the present invention is not limited to this algorithm. For example, if the result of an user's head motion analysis is "raising up", then the SVAS will send a "raising up" message to the central management server CMS. Herein, the head motions of a user may comprise raising up, lowering down, turning left, turning right, going forward, going backward, raising up on the left, raising up on the right, lowering down on the left or lowering down on the right etc.. The CMS will send a corresponding "raising up" instruction to the control signaling gateway CSG, and then the CSG will translate it into a PTZ control instruction and send it to an on-site digital video server DVS. Afterwards, the DVS will send to an on-site camera a mechanical instruction for instructing the camera to perform a corresponding action, according to the PTZ control instruction.

In such an intelligent video surveillance system, the SVAS and the CMS form a "brain" part for issuing instructions, and the CSG and the DVS form a "nerve" part for translating instructions from the CMS.

It should be noted that, the information exchanging in such an intelligent video surveillance system may be implemented using any existing or future communication protocols, for example (but not limited to) the XML in combination with the HTTP. For example, a "raising up" message using the HTTP plus the XML is as followings: 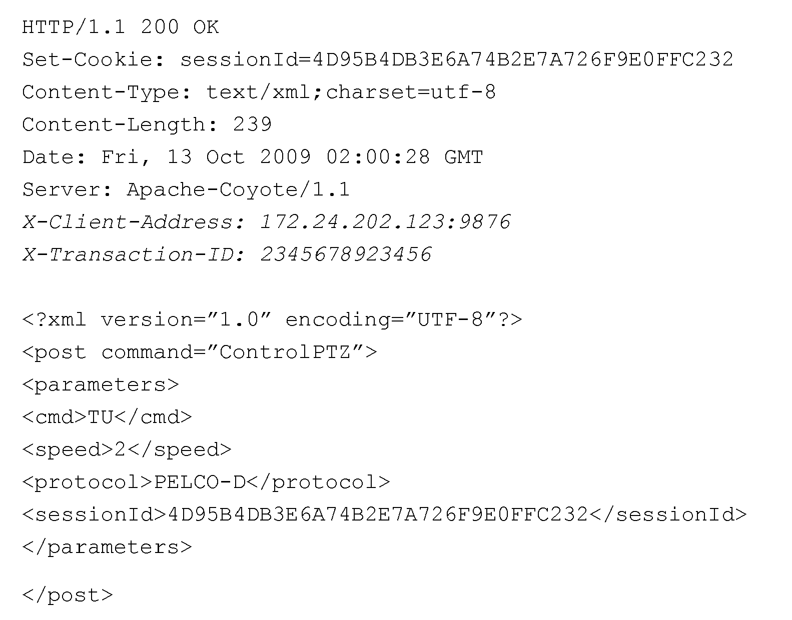 in which:
- cmd corresponds to operating actions of a camera;
- TU corresponds to up, TD corresponds to down, PL corresponds to left, PR corresponds to right, TUPR corresponds to up on the right, TDPR corresponds to down on the right, TUPL corresponds to up on the left, and TDPL corresponds to down on the left;
- speed corresponds to the action speed of the camera and may comprise 1-5 levels; and
- protocol corresponds to respective cloud platform protocols of different cameras, for example PELCO-D, PELCO-P, LiLin etc..

In implementation, the intelligent video processing module of this embodiment may be implemented in software, hardware or a combination of them. For example, those skilled in the art are familiar with a variety of devices which may be used to implement these components, such as micro-processor, micro-controller, ASIC, PLD and/or FPGA etc. The intelligent video processing module of the present embodiment may be either integrated with the central management server CMS or implemented independently.

By using the intelligent video surveillance system of the present invention, a user who can not use such a man-machine interface as keyboard/mouse is now able to perform video surveillance, which is much more convenient. Capturing a user's head motion by a camera at the user's side can provide an intelligent and non-contact interface. With this kind of intelligent interface, a user can control PTZ in a more nature manner and obtain a visual experience with the feeling of immersion. For example, if the user raises his head up, then the camera will rise, thus enabling the user to see upper view. The intelligent video surveillance system of the present invention has also the advantage of simple implementation.

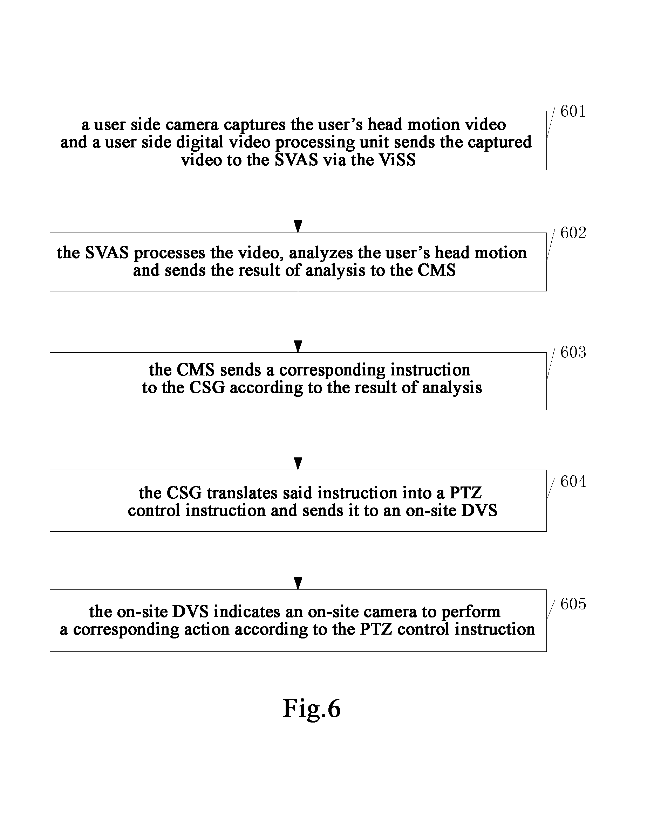

Based on the same inventive concept, according to another aspect of the present invention, a method for improving video surveillance is proposed. This method will be described in the following with referent to Figure 6. The method of the present embodiment may be applicable to for example the system as shown in Figure 3, and the explanation about said system will not be repeated herein.

As shown in Figure 6, in step 601, a camera at a user's side captures the user's head motion video and a user side digital video processing unit sends the captured video to a first server via a video surveillance platform. Herein, the video surveillance platform is for example a ViSS system, the first server is for example a SVAS, and the digital video processing unit at the user's side is for example a digital video server DVS.

It should be understood that, the camera at the user's side means a camera deployed at the user's side and used for capturing the user's head motion, and the user side digital video processing unit means a digital video processing unit connected to the camera at the user's side or integrated with said camera.

Next, at step 602, the first server processes said video, analyzes the head motion and sends the result of the analysis to a second server. Herein, the first server is for example a SVAS and the second server is for example a CMS. More particularly, the SVAS may analyze the head motion using the intelligent motion detection and analysis algorithm. Reference could be made to the above mentioned document as to the intelligent motion detection and analysis algorithm. However, it should be noted that the present invention is not limited to this algorithm, and there exist many such intelligent motion detection and analysis algorithms in the prior art. For example, if the result of the user's head motion is "raising up", then the SVAS will send a "raising up" message to the central management server CMS. The user's head motions may comprise for example raising up, lowering down, turning left, turning right, going forward, going backward, raising up on the left, raising up on the right, lowering down on the left or lowering down on the right etc..

Then, in step 603, the second server sends a corresponding instruction to a gateway according to the result of analysis. Herein, the second server is for example a CMS and the gateway is for example a CSG. For example, if the result of analysis is "raising up", then the CMS will send a corresponding "raising up" instruction to the CSG.

Then , in step 604, the gateway translates the received instruction into a PTZ control instruction and sends the PTZ control instruction to a on-site digital video processing unit in the video surveillance platform. Herein, the gateway is for example a CSG, the video monitoring platform is for example a ViSS system, and the on-site digital video processing unit is for example a DVS.

It should be understood that, the on-site camera means a front camera deployed at the actual surveillance place, monitoring a certain range of area and controlled by a user, and the digital video processing unit means a digital video processing unit connected to the on-site camera or integrated with said camera.

Finally, in step 605, the on-site digital video processing unit indicates the on-site camera to perform a correspond action according to the PTZ control instruction. More particularly, the on-site digital video processing unit sends to the on-site camera a mechanical instruction indicating said camera to perform a corresponding action, according to the received PTZ control instruction.

It should be noted that, the information exchanging between those network elements in the above method steps may be implemented using any existing or future communication protocols, for example (but not limited to) using the above described method of XML in combination with HTTP.

In this way, by employing the video surveillance method of the present invention, a user who can not use such a man-machine interface as keyboard/mouse is now able to perform video surveillance, which is much more convenient. Capturing a user's head motion by a camera at the user's side can provide an intelligent and non-contact interface. With this kind of intelligent interface, a user can control PTZ in a more nature manner.

Although the exemplary embodiments of the method and system for improving video surveillance are described above in detail, the above embodiments are not exhaustive, and those skilled in the art can make numerous changes and modifications within the spirit and scope of the present invention. Therefore, the present invention is not limited to those embodiments, the scope of which is defined only by the appended claims.

## Claims

1. A method for improving video surveillance, **characterized in that** a video surveillance platform is connected to a first server, the video surveillance platform also comprises a second server and a gateway, the method comprising:
at a user's side, a user side camera capturing the user's head motion and a user side digital video processing unit sending the captured video to the first sever via the video surveillance platform;
the first server processing the video, analyzing the head motion and sending the result of analysis to the second server; and
the second server sending a corresponding instruction to the gateway according to the result of analysis.

2. The method according to claim 1, wherein the gateway translates the received instruction into a PTZ control instruction and sends this PTZ control instruction to an on-site digital video processing unit, and then the on-site digital video processing unit indicates an on-site camera to perform a corresponding action according to the PTZ control instruction.

3. The method according to claim 1 or 2, wherein the head motions comprises raising up, lowering down, turning left, turning right, going forward, going backward, raising up on the left, raising up on the right, lowering down on the left or lowering down on the right.

4. The method according to any of claims 1-3, wherein the first server analyzes the head motion using an intelligent motion detection and analysis algorithm.

5. The method according to claim 4, wherein the intelligent motion detection and analysis algorithm is a robust estimation algorithm for three-dimensional parameter.

6. The method according to any of claims 1-5, wherein the first server, the second server, the user side and the on-site digital video processing units and the gateway exchange information therebetween using a technology of HTTP in combination with XML.

7. The method according to any of claims 1-6, wherein the first server is a semantic video application server, the second server is a central management server, the user side and the on-site digital video processing units are digital video servers, and the gateway is a control signaling gateway.

8. A system for improving video surveillance, **characterized in that** it comprises a video surveillance platform and a first server connected to the video surveillance platform, the video surveillance platform includes also a second server and a gateway, the first server is used for processing a video about a user's head motion forwarded by the video surveillance platform upon reception of said video, analyzing the head motion and sending the result of analysis to the second server, the second server is used for sending a corresponding instruction to the gateway after having received the result of analysis, according to the result of analysis.

9. The system according to claim 8, wherein the gateway is used for translating the received instruction into a PTZ control instruction and sending this PTZ control instruction to an on-site digital video processing unit, and the on-site digital video processing unit is used for indicating an on-site camera to perform a corresponding action according to the PTZ control instruction.

10. The system according to claim 8 or 9, wherein the head motions comprises raising up, lowering down, turning left, turning right, going forward, going backward, raising up on the left, raising up on the right, lowering down on the left or lowering down on the right.

11. The system according to any of claims 8-10, wherein the first server analyzes the head motion using an intelligent motion detection and analysis algorithm.

12. The system according to claim 11, wherein the intelligent motion detection and analysis algorithm is a robust estimation algorithm for three-dimensional parameter.

13. The system according to any of claims 8-12, wherein the first server, the second server, the user side and the on-site digital video processing units and the gateway exchange information therebetween using a technology of HTTP in combination with XML.

14. The system according to any of claims 8-13, wherein the first server is a semantic video application server, the second server is a central management server, the user side and the on-site digital video processing units are digital video servers, and the gateway is a control signaling gateway.
